(19) Europäisches Patentamt
European Patent Office
Office européen des brevets

(11) **EP 1 447 769 A1**

(12) **EUROPÄISCHE PATENTANMELDUNG**

(43) Veröffentlichungstag:
18.08.2004 Patentblatt 2004/34

(51) Int Cl.⁷: **G06K 19/077**, F17C 13/00

(21) Anmeldenummer: 04002605.6

(22) Anmeldetag: 05.02.2004

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **11.02.2003 CH 20030201**

(71) Anmelder: **SOKYMAT S.A.**
**1614 Granges (Veveyse) (CH)**

(72) Erfinder:
• **Pique, Stephane**
  **1844 Villeneuve (CH)**
• **Miehling, Martin**
  **1614 Granges (VSE) (CH)**

(74) Vertreter: **Besse, François**
  **ANDRE ROLAND IPS,**
  **15, Avenue Tissot,**
  **P.O. Box 1255**
  **1001 Lausanne (CH)**

(54) **Transpondermontage an metallischen Behältern**

(57)    Die Erfindung betrifft die Anordnung von Transpondern auf metallisch leitenden Behältern. Die besondere Art sowie der Ort der Montage erlauben eine direkte Montage des Transponders auf Metal. Zusätzlich führt die besondere Art der Montage zu einer Reichweitenerhöhung im System gegenüber der normalen Lesereichweite des Transponders ohne die besondere Montage, indem in der leitenden oberfläche des Behälters induzierte Ströme verwendet werden.

Zeichnung 3

**Beschreibung**

Die Erfindung betrifft die Verwendung passiver Radiofrequenz Transponder, auch RFID Transponder genannt, für die Ident-ifikation von metallisch leitenden Behältern.

Passive Transponder verfügen über keine integrierten Energiequellen und müssen somit durch ein externes, elektromagnetisches Feld mit Energie versorgt werden. Ohne die Energieversorgung von aussen ist der Transponder inaktiv und übermittelt keine Daten.

Transponder eignen sich hervorragend zur Kennzeichnung / Identifikation von indu-striell genutzten Gütern, da die Lesung keinen direkten Sichtkontakt zu dem Lesegerät bedingt wie dies bei optischen Identifikationssystemen der Fall ist.

Dies ermöglicht es den Transponder in die Güter zu integrieren und sogar mechanisch zu schützen, solange die Güter nicht metallisch leitend sind.

Metallisch leitende Oberflächen schirmen und dämpfen die elektromagnetischen Felder des Lesegerätes und reduzieren dadurch die Energieeinspeisung in den Transponder. Dies vermindert, zum Teil drastisch, die Lesereichweite des Transpondersystems. Aus diesem Grund eignen sich passive Transponder nur bedingt für eine Montage auf Metal bzw. für die automatische Identifikation und Datenerhebung (AIDC) von metallischen Gütern.

Der Erfindung zugrunde liegt die Aufgabe, metallische Güter automatisch zu identifizieren. Dies bedingt aus Kosten und Positionierungsgründen den Einsatz von passiven Transpondern, um eine Lesung auch bei ungenauer Platzierung des Gutes zu erreichen sowie eine Lesereichweite von mehreren cm zwischen der Lese-antenne und der Oberfläche des zu identifizierenden Gutes.

Bisher auf dem Markt bekannte Identifikationssysteme auf Basis von passiven Transpondern haben den Nachteil, dass die Feldabsorption bzw. die Schirmung des elektromagnetischen Feldes darin resultiert, dass die Lesereichweiten im metallischen Umfeld sehr gering sind gegenüber denen im Freifeld.

Als Folge dessen muss der Transponder sehr exponiert an den zu identifizierenden Gütern montiert werden, um keinen zu grossen Abstand von den Leseantennen zu haben. Die Exponierung führt zwangsweise zu einer häufigen Zerstörung der Datenträger.

Darüber hinaus müssen die Güter typisch-erweise in einer definierten Position zu den Leseantennen ausgerichtet werden. Dies resultiert in Zusatzkosten für Menschen oder Maschinen die diese Positionierung durchführen.

Kernaufgabe der Erfindung war es ein automatisches Identifikationssystem zu entwickeln, welches es erlaubt die Transponder möglichst unsichtbar und unzerstörbar und somit geschützt vor mutwilliger und zufälliger Zerstörung auf dem Gut zu fixieren.

Zusätzlich muss die Positionierung eine multidirektionale Lesung ermöglichen um auf ein Ausrichten der Güter vor der Lesung zu verzichten.

Aus der Patentanmeldung WO 02/29714 ist eine Konstruktion bekannt wo die Lesereichweite eines passiven Transponders dadurch erhöht wurde, dass er mit einer zusätzlichen Koppelspule, die aus einer Primär und einer Sekundärspule besteht, kombiniert wurde. Dieses sehr einfache und elegante Verfahren zur Reichweitenerhöhung von passiven Transpondern funktioniert bei metallischen Behältern leider nur, wenn sich die Koppelspule in einem ausreichendem Abstand von dem Metallbehälter befindet. Dadurch wäre die Koppelspule wieder exponiert und somit das Objekt von Zerstörungen. Darüber hinaus liesse sich eine solche Konstruktion weder kostengünstig herstellen noch kostengünstig am Behälter befestigen.

Die gestellte Aufgabe wurde erfinderisch durch folgende Konstruktion gelöst: Das elektromagnetische Wechselfeld des Lesegerätes induziert einen Gesamtstrom $I_{ind}$ in elektrische Leiter und Oberflächen. Dieser induzierte Gesamtstrom $I_{ind}$, der durch das elektromagnetische Wechselfeld (7) in die metallisch leitende Oberfläche des Behälter induziert wird besteht selbst wiederum aus Partialströmen $I_{part}B =(4)$ die sich über die leitfähige Oberfläche aufteilen. Es gilt :

$$I_{ind} = \oint I_{part}$$

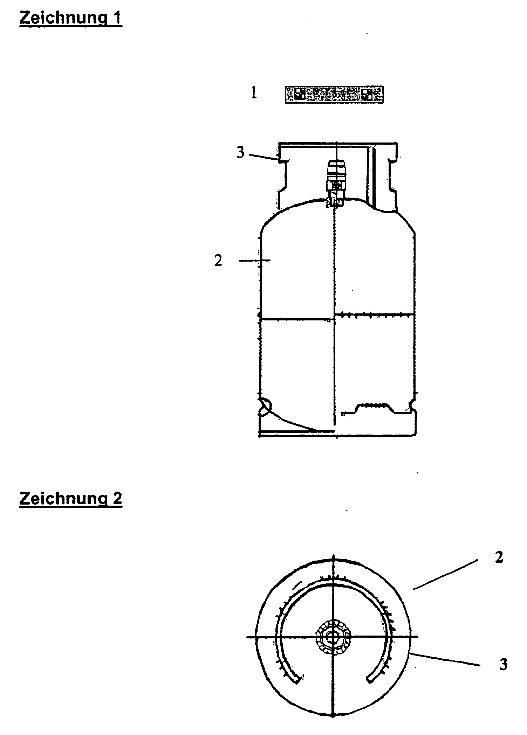

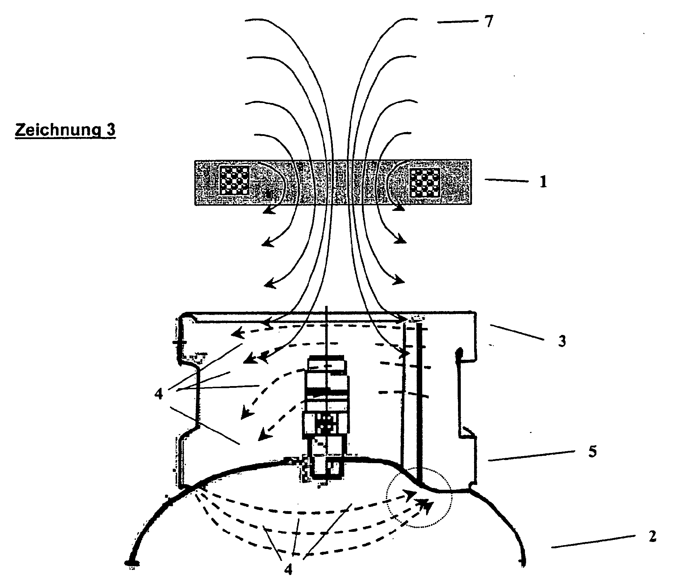

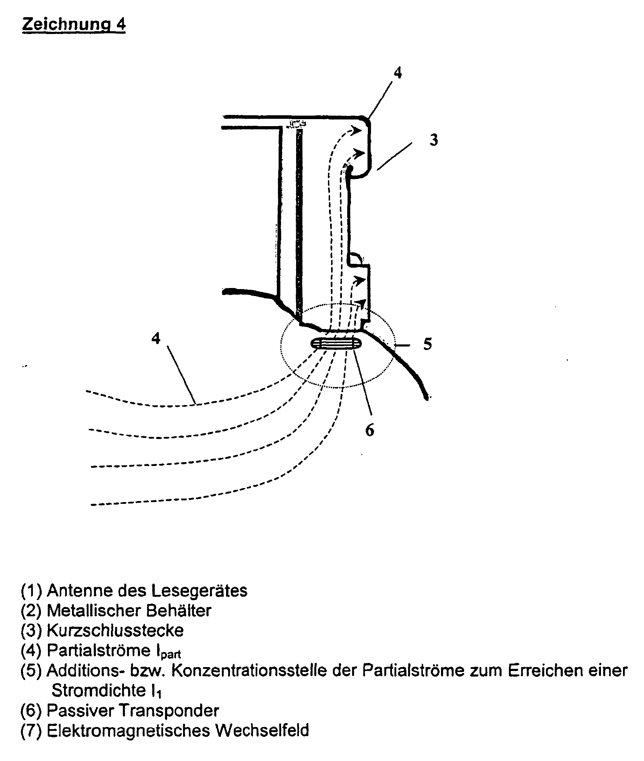

Durch das Ausnutzen von einem, durch den metallischen Behälter (2) konstruktiv bereitgestellten Kurzschlussstrecke (3) bzw. Kurzschlussringes wird der Strom in einer elektrisch geschlossenen Schleife geführt. (Zeichnung 3)

Wenn nun zusätzlich die Kurzschluss-strecke (3) des metallisch leitenden Behälter (2) selbst derart geformt ist, dass die in dieser Schleife Messenden Partialströme $I_{part}$ (4) sich an bestimmten Bereichen des Behälters addieren bzw. konzentrieren, resultiert dies in einer Stromdichte $I_1$ (5) die bei einem an dieser entsprechenden Stelle platzierten Transponder (6) einen zweiten, sekundären Strom $I_2$ in dessen Antennenkreis induzieren, der ausreicht um den Transponder mit Energie zu versorgen. (Zeichnung 4)

Der Transponder wird somit nicht direkt durch das elektromagnetische Feld des Lesegerätes mit Energie versorgt, sondern indirekt durch die Induktionswirkung, des im Behälter fliessenden el. Stroms $I_{ind}$ bzw. dessen Partialströme, in de Antennenkreis des Transponders.

Um eine ausreichend gute Induktions-wirkung zu erzielen ist es notwendig den Tranponder so dicht wie möglich an der metallisch leitenden Oberfläche zu platzieren. Selbst eine Integration des Transponders in die elektrisch leitende Oberfläche des Behälters ist möglich.

**Patentansprüche**

1. Identifikationssystem beste-hend aus einem Lesegerät und einem metallisch leitenden Behälter der mit einem passiven Transponder ausgestattet ist, **dadurch gekennzeichnet dass** das elektromagnetische Wechselfeld des Lese-gerätes einen Gesamtstrom $I_{ind}$, bestehend aus den Teilströmen $I_{part}$ in die elektrisch leitende Oberfläche des Behälters induziert die dann wiederum mittels Induktion einen zweiten Strom $I_2$ in den Antennenkreis des entsprechend platzierten passiven Trans-ponders treiben, so dass dieser mit Energie versorgt.

2. Identifikationssystem nach Anspruch 1, **dadurch gekennzeichnet dass** die erzielte Lesereichweite zwischen dem Transponder und der Antenne des Lesegerätes grösser ist als die mit gleichem Lesegerät und gleicher Antenne erzielbare Lesereichweite ohne die Verwendung des Prinzips der indi-rekten Energieversorgung des Transponders ge-mäss Anspruch 1).

3. Identifikationssystem nach Anspruch 1 und 2 **dadurch gekennzeichnet dass** die Behälter Oberflächenelemente aufweisen die mindestens einen Viertel-kreis beschreiben.

4. Identifikationssystem nach Anspruch 1 bis 3, **dadurch gekennzeichnet dass** der Transponder direkt mit einem Abstand kleiner 5mm auf der elektrisch leitenden Oberfläche des Behälters montiert ist

5. Identifikationssystem nach Anspruch 1 bis 3, **dadurch gekennzeichnet dass** der Transponder in der elektrisch leitenden Oberfläche des Behältes inte-griert ist

6. Identifikationssystem nach einem der Ansprüche 1 bis 5, **dadurch gekennzeichnet dass** es sich bei dem Behälter um einen metallischen Mehrwegbehälter handelt.

7. Identifikationssystem nach einem der Ansprüche 1 bis 6, **dadurch gekennzeichnet dass** es sich bei dem metallischem Mehrwegbehälter um eine Gasflasche handelt.

8. Identifikationssystem nach einem der Ansprüche 1 bis 6, **dadurch gekennzeichnet dass** es sich bei dem metallischem Mehrwegbehälter um einen Getränkebehälter handelt.

9. Identifikationssystem nach einem der Ansprüche 1 bis 6, **dadurch gekennzeichnet dass** es sich bei dem verwendeten Transponder um einen passiven Transponder mit Ferritkernspule handelt.

10. Identifikationssystem nach einem der Ansprüche 1 bis 6, **dadurch gekennzeichnet dass** es sich bei dem verwendeten Transponder um einen passiven Transponder mit Luftspule handelt.

11. Verfahren für die Identifikation von metallischen Behältern unter Einsatz eines Systems nach einem der Ansprüche 1 bis 10, **dadurch gekennzeichnet, dass** das elektromagnetische Wechselfeld des Lesegerätes einen Gesamtstrom $I_{ind}$, bestehend aus den Teilströmen $I_{part}$ in die elektrisch leitende Oberfläche des Behälters induziert die dann wiederum mittels Induktion einen zweiten Strom $I_2$ in den An-tennenkreis des entsprechend platzierten passiven Transponders treiben, der diesen mit Energie ver-sorgt.

## Zeichnung 1

## Zeichnung 2

**Zeichnung 3**

## Zeichnung 4

(1) Antenne des Lesegerätes
(2) Metallischer Behälter
(3) Kurzschlusstecke
(4) Partialströme $I_{part}$
(5) Additions- bzw. Konzentrationsstelle der Partialströme zum Erreichen einer
    Stromdichte $I_1$
(6) Passiver Transponder
(7) Elektromagnetisches Wechselfeld

Europäisches
Patentamt

# EUROPÄISCHER RECHERCHENBERICHT

Nummer der Anmeldung

EP 04 00 2605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 55 324 A (SCHEUERMANN FRANK ;SCHULZE SIEGFRIED (DE)) 23. Mai 2002 (2002-05-23) * Absätze [0010]-[0022]; Abbildungen 1,2 * --- | 1-11 | G06K19/077 F17C13/00 |
| A | DE 199 11 032 A (MESSER GRIESHEIM GMBH) 21. September 2000 (2000-09-21) * Spalte 1, Zeile 16-63; Abbildungen 1,3 * --- | 1 | |
| A | GB 2 288 103 A (HUGHES MICROELECTRONICS EUROPA) 4. Oktober 1995 (1995-10-04) * Seite 1, Zeile 9 - Seite 3, Zeile 31 * * Seite 7, Zeile 8-17 * * Abbildungen 1-4 * --- | 1 | |
| A | WO 95/15622 A (IDESCO OY ;ELSILAE MARTTI (FI); PAEAEKKOE JARI (FI); TOPPI JUHA (F) 8. Juni 1995 (1995-06-08) * Zusammenfassung; Abbildung 3 * ----- | 1 | |

| RECHERCHIERTE SACHGEBIETE (Int.Cl.7) |
|---|
| G06K F17C |

Der vorliegende Recherchenbericht wurde für alle Patentansprüche erstellt

| Recherchenort | Abschlußdatum der Recherche | Prüfer |
|---|---|---|
| MÜNCHEN | 1. Juni 2004 | Koegler, L |

**ANHANG ZUM EUROPÄISCHEN RECHERCHENBERICHT
ÜBER DIE EUROPÄISCHE PATENTANMELDUNG NR.** EP 04 00 2605

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 10055324 | A | 23-05-2002 | DE | 10055324 A1 | 23-05-2002 |
| DE 19911032 | A | 21-09-2000 | DE | 19911032 A1 | 21-09-2000 |
| GB 2288103 | A | 04-10-1995 | KEINE | | |
| WO 9515622 | A | 08-06-1995 | FI | 935367 A | 31-05-1995 |
| | | | EP | 0732012 A1 | 18-09-1996 |
| | | | WO | 9515622 A1 | 08-06-1995 |

EPO FORM P0461

Für nähere Einzelheiten zu diesem Anhang : siehe Amtsblatt des Europäischen Patentamts, Nr.12/82